# EUROPEAN PATENT SPECIFICATION

(11) **EP 3 084 085 B1**
(45) Date of publication and mention of the grant of the patent: **31.03.2021**
(21) Application number: 14871915.6
(22) Date of filing: 18.12.2014
(51) Int. Cl.: E03B 1/04, A47K 3/28, E03C 1/00

(54) **A WATER HYBRID DEVICE**
HYBRIDE WASSERVORRICHTUNG
DISPOSITIF HYBRIDE POUR EAU

(30) Priority: 20.12.2013 SE 1351573
(43) Date of publication of application: 26.10.2016
(73) Proprietor: Orbital Systems AB, 211 20 Malmö (SE)
(72) Inventor: SPARRE, Erik, 212 50 Malmö (SE); NYBOM, Göran, 247 35 Södra Sandby (SE)
(74) Representative: AWA Sweden AB
(86) International application number: PCT/SE2014/051536
(87) International publication number: WO 2015/094107

(56) References cited:
- WO-A1-2007/045015
- WO-A1-2009/147647
- WO-A1-2013/095278
- NL-C- 1 039 131
- US-A1- 2002 108 440
- US-A1- 2003 010 117
- US-A1- 2013 180 928
- US-A1- 2013 212 800

## Description

### Field of the invention

The present invention relates to a hybrid device for showers, wash basins or the like, and allowing purification and either recycling of water or discarding of water.

### Technical Background

Hybrid devices for purification and recycling of water are known today. One example is shown in PCT/SE2012/051430 which discloses a hybrid device allowing purification and either recycling of water or discarding of water, wherein said hybrid device comprises a recirculation loop, a filter system with a nano-filter, at least one filter quality sensor, at least one pre-filter positioned before or after the nano-filter in process terms, and wherein the hybrid device is arranged to redirect the water from recirculation to drainage when the at least one filter quality sensor indicates the need thereol. Further examples of such hybrid devices are described in WO 2007/045015 and WO 2009/147647.

One aim of the present invention is to provide a hybrid device which exhibits high flexibility in terms of measurement, both in relation to parameters and ranges, and which also provides high measurement reliability. Moreover, the present invention also provides a very cost effective solution which also is a clear improvement in relation to the existing systems of today.

### Summary of the invention

The purpose above is achieved by a hybrid device for showers, wash basins or the like, and allowing purification and either recycling of water or discarding of water, wherein said hybrid device comprises a recirculation loop in which a filter system is arranged, wherein the hybrid device also comprises multiple sensors, wherein the multiple sensors are electrical conductivity (EC) sensors, sensors comprising electrode pairs, wherein each of the multiple sensors are directed to different parameters, said parameters being water quality, level and/or leakage, wherein the hybrid device also comprises a micro processor and wherein the multiple sensors are connected to the micro processor, wherein the hybrid device also comprises an electronic control system, wherein the electronic control system of the hybrid device is arranged to measure on one electrode pair at a time.

In relation to the expression "hybrid device" according to the present invention this is referring to the feature of "allowing purification and recycling/discarding of water". Some possible examples are showers, wash basin or the like.

Furthermore, it should be noted that the expression "discarding" also covers separating the water to a further processing such as purification, treatment, etc.

Generally speaking, conductivity sensors measure the total concentration of ions in solution. Electrode contacting sensors (or EC (electrical conductivity) sensors) are suitable to use for low conductivity applications, such as in the case of water.

In relation to the conductivity sensors according to the present invention it may further be said that these may technically be directed to measurement of resistance, and then the conductivity may be obtained by a conversion of the measured value. The measuring of the resistance also allows for the simultaneous measuring of other parameters, e.g. temperature may be measured by measuring the resistance of a platinum element, e.g. a PT100 or the like. The hybrid device according to the present invention comprises at least one micro processor. The multiple sensors are connected to the micro processor which has input(s) and output(s). As such the electrodes (electrode pairs) of the multiple EC sensors of the present invention are directed to measuring resistance, which may be converted in the micro processor to conductivity when also measuring temperature and water level.

Generally defined, micro processors or microprocessors, which also can be called micro controllers, incorporate the functions of the central processing unit (CPU) of a computer on a single integrated circuit (IC) or possible on a few such integrated circuits. With reference to the present invention, it may further be mentioned that the hybrid device may include one or several micro processors. There is a substantial amount of different type of micro processors and in general all type may be possible to incorporate in the hybrid device system according to the present invention. As an example, size, capacity and other performance properties may vary in the possible micro processors to incorporate in the system according to the present invention.

According to the present invention, the one and same micro processor may be connected to several hybrid devices and their individual sensors. As an example, several hybrid devices in the form of showers may be connected to each other to form a system, which system has at least one micro processor which functions as a mutual component for all showers.

The resistance of the water will change over time depending on the quality of the water. The measuring range is decided by the resistor in the sensor. The EC sensors of the present invention may also provide for a dynamic measuring of the resistance of water by the incorporation of multiple resistors into one and the same EC sensor. As such there is provided the possibility of choosing and thus connecting the resistor of these multiple resistors that has the best matching measuring range when compared to the resistance of the water.

The multiple sensor system, being a multiple EC sensor system, according to the present invention has several advantages. First of all, these types of sensors use inexpensive components, and therefore the economy is improved in comparison to existing systems. Secondly, as such inexpensive components are easily replaced by similar components the measurement range of the system may easily be changed. Furthermore, multiple measuring points, such as in the system according to the present invention brings about better economy for advanced components and circuit solutions. Therefore, and as mentioned above, the hybrid device according to the present invention comprises a micro processor, such as e.g. Atmel ATmega328, which takes care of the entire measure control, instead of having several individual sensors for each measuring point and where these individual sensors are analog or digital circuits. Other advantages, such as being low power consuming and the possibility of measuring many different parameters, such as water quality, flow, level and/or leakage are further disclosed below. The level measuring according to the present invention is performed by the arrangement of electrode pairs which detect the presence of water by detecting resistance (conductivity after conversion). Such electrodes may be provided at different height and may as such detect if water is present or not. The level measurement system may be further advanced. As an example, three electrodes may be provided as two electrode pairs (one electrode in common). The different electrodes may be provided with different sensitivity for the level measurement. For instance, one electrode may be arranged as a bar extending somewhat or totally vertically, and this may then function as a measuring device for the actual level of the water. It shall further be said that this level measuring concept according to the present invention may apply for different parts of the system, such as semi-open supply chain (see below), tank, and in a possible leakage tray.

It may further be said that although PCT/SE2012/051430 also mentions that the water quality sensor therein may be a conductive sensor, such as an electrical conductive sensor, the multiple conductivity sensor system is not described in PCT/SE2012/051430 or hinted therein. As may be understood from above, the multiple conductivity sensor of the hybrid device according to the present invention has several important advantages. In relation to PCT/SE2012/051430 it may be said that it mentions that the hybrid device disclosed therein is arranged to redirect the water from recirculation to drainage when the at least one filter quality sensor indicates the need thereof. This feature is also true in relation to the hybrid device according to the present invention when a sensor of the present invention indicates the need thereof.

Furthermore, in US 2013/0212800 there is disclosed a shower system comprising a user actuator indicating said user's desire to use recycled water during the shower, a shower head, a drain, a first valve capable of selecting water to be emitted from said shower head from a potable water source or water from a mixture of potable water and recycled water from said drain, and a processor, said processor being in communication with said user actuator and said first valve, wherein said first valve is capable of being controlled by said processor.

The system disclosed in US 2013/0212800 does not comprise a micro processor, and consequently no micro processor being connected to the sensors involved as is the case of the hybrid device according to the present invention. Furthermore, the device shown in PCT/SE2012/051430 is not said to comprise a micro processor being connected to multiple conductivity sensors.

### Brief description of the drawings

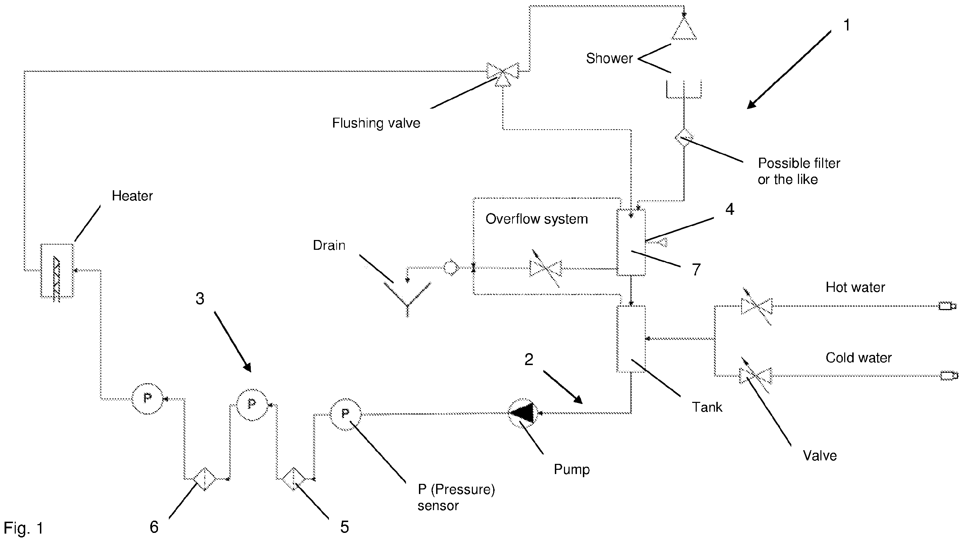

In fig. 1 there is shown a flow chart of a system comprising a hybrid device according to one specific embodiment of the present invention.

### Specific embodiments of the invention

Below specific embodiments of the present invention are disclosed.

According to one specific embodiment, the filter system of the hybrid device comprises at least two different filters. As seen in the drawing, one of the filters may be a nano-filter. Furthermore, a pre-filter may be positioned before the nano-filter. Moreover, also further filters may be included, e.g. a pre-pre-filter positioned in connection to the shower floor such as shown in the drawing.

Each of the multiple sensors according to the present invention may be directed to different parameters. According to the present invention, the hybrid device comprises sensors directed to water quality, water level and/or water leakage. All these sensors are electrical conductivity (EC) sensors. With reference to the water level, this water level may e.g. be directed to the level in the tank, such as shown in fig. 1. With reference to water leakage, sensors may be provided in connection with the surrounding of the floor of the hybrid device, such as also presented in fig. 1. It may further be mentioned that according to one embodiment of the present invention the sensors are directed to measuring resistance. As conductivity is temperature-dependent, also the temperature must be measured for deciding the conductivity from the resistance. By measuring both resistance and temperature, many different parameters may be possible to get a reading on, such as e.g. pressure, actual level and/or water flow. According to one specific embodiment of the present invention, the sensors are directed to all of quality, level and leakage, and where these specific sensors are conductivity sensors.

Moreover, according to one embodiment of the present invention the hybrid device comprises a semi-open water supply line in which at least one conductivity sensor is provided. Also in this case the at least one conductivity sensor is an EC sensor or several EC sensors. The semi-open design of the water supply line has several advantages. Firstly, these provides for a possibility to measure the water quality in a simple way. Secondly, also the water flow in the semi-open water supply line may be measured, which may be possible by incorporating e.g. the 3 electrode arrangement disclosed above. As a semi-open water supply line implies a shape being open in the top but which still may transport a water flow, such as a channel, the risk of skimming is limited. This is achieved as there is no "top" of the device, such as in the case of a cylinder. With a cylinder or a totally circular pipe skimming may occur. A semi-open water supply line according to the present invention provides a better solution to transport formed foam together with water that is separated off. As this foam also contains dirt and contaminants it is of interest to make sure to remove this from the system in an effective way.

Moreover, the present invention also provides means for limiting or eliminating fouling or build-up of contaminants on the electrodes. Limiting such risk may e.g. be performed by the incorporation of balls or the like in the tank so that these function as brushes which upon contact removes contaminants from the electrodes by a brushing effect. As such, the fouling on the electrodes may be reduced. Moreover, a flushing nozzle may be arranged for flushing water into the semi-open water supply line. This may also be of interest for creating the possibility of cleaning the water supply line.

Furthermore, according to one specific embodiment of the present invention, the hybrid device comprises multiple electrical conductivity (EC) sensors being arranged as at least three electrodes arranged as two electrode pairs with one common electrode and wherein the sensitivity in relation to level differs in at least two of the electrodes. To arrange the EC sensors as such provides for the possibility to measure the level in a simple effective way. The provision of separate sensors may be of interest for measurement of leakage and/or tank level (see fig. 1). As mentioned, this may be performed in different ways, such as in a simple and binary manner or as more advanced where the sensitivity for level is different in the electrodes.

Moreover, and as said, also the water flow may be measured. With a semi-open water supply line, when a value of the level is obtained also the flow can be calculated. Also this parameter may be of interest when deciding on recirculation mode or not.

Fact is that this concept according to the present invention provides for the possibility to measure several parameters in a simple yet effective way. In addition thereto, the water geometry in the system does not have to be "fix" for the accrual measurement paradigm, which is different in relation to known systems used today. Moreover, and as mentioned, as the conductivity is temperature-dependent, also the temperature must be measured. This may for instance be performed in the actual electrodes as these are heat conductive. As such, the temperature may be measured outside of the actual water flow via the heat conduction in the electrodes.

According to yet another specific embodiment of the present invention there is provided a flow restrictor in the semi-open water supply line. A flow restrictor may be provided to ensure a more or less constant level of water in the semi-open water supply line. This may be of interest as a varying level implies difficulties in measuring the conductivity in an accurate and reliable way.

The electronic control system according to the present invention is directed to measuring on one electrode pair at a time. Furthermore, according to one specific embodiment of the present invention, at least part of, preferably the entire electronic control system is galvanically isolated.

It may further be said that the present invention also covers multiple hybrid device solutions. Several individual water collecting units comprising the measuring / sensor means may be comprised in one and the same hybrid device, e.g. in a shower, according to the present invention. Such collecting units are situated in the floor drain of such a shower, e.g. in the form of a semi-open water supply line as shown in the drawing. Each such collecting unit comprises at least one individual EC sensor and individual means for flowing the water to recirculation or separation. Each such individual collecting unit may be of the same exact type as another one but may also differ in the type of sensor and measuring ranges, etc. Nevertheless, they will at least differ in the position within a hybrid device according to the present invention.

This may also provide for the possibility of collecting different "types" of water, e.g. water flowing in front of the user in the shower in one collecting unit and water flowing behind the user in the shower in another such unit. As the latter water may contain a higher level of shampoo or the like, one may want to prevent this from been mixed with cleaner water. Such multiple systems may also include means for changing the individual units from recirculation mode to separation / discharging mode.

Moreover, the present invention also includes systems comprising several connected hybrid devices. In such a case it should be noted that one sensor in fact may be central and common for all of the hybrid devices, such as a sensor measuring the inflowing water to all of the hybrid devices. Therefore, the present invention also embodies e.g. a system comprising two different hybrid devices having one local conductive sensor each and which system also comprises one central and common conductive sensor. Furthermore, also other parts may be common for multiple units according to the present invention, such as e.g. the reservoir tank, filter system, etc. This is valid both for the case when one hybrid device comprises several collecting units and in the case of a system comprising several hybrid devices.

### Detailed description of the drawings

In fig. 1 showing a flow chart of a system comprising a hybrid device 1 according to one specific embodiment of the present invention, one type of recirculation loop 2 and filter system 3, in this case comprising a pre-filter 5 and a nano-filter 6 may be seen. Furthermore, the multiple EC sensors are provided in the semi-open water supply line 7, but several other EC sensors may be provided in the system. Moreover, several other types of sensors may also be provided in the system of the hybrid device 1.

### Conclusions

The multiple conductivity sensor system of the hybrid device according to the preset invention has several advantages. A selection of these advantages is listed below.
* Economy - the system comprises few and inexpensive components in comparison to existing systems.
* E.g. no transformer or coils are used or needed, and thus the size of the sensors may be small. This is an advantage.
* Good signal-to-noise ratio. As high current may be used, noise and other frequency disturbances may be marginalized.
* The measuring range may be changed only by replacing one simple and inexpensive component (the resistor).
* Multiple measuring points drive the economic possibility of more advanced components and circuit solutions. As such, one micro processor may be incorporated, which micro processor may collect many measuring points instead of doing this by having many totally individual sensors.
* Low-power consumption in comparison to existing systems.
* Many different types of electrodes may be used. Design is not important, and simple ones may be used. Only electronic contact with the water is needed, and as such existing metal plates may be used as electrodes.
* Programming may be used to decide the interpretation and user visualization of conductivity. As mentioned, this goes for quality, level, leakage, and e.g. flow.
* Temperature may be measured outside of the actual flow, e.g. by measuring the temperature of metallic parts of the sensor electrodes.
* The processor circuit allows for digital communication with other systems and circuits (communication protocol with the surrounding). Examples are digital temperature measuring devices / readers.
* A repeated calibration is not needed with the used EC sensors according to the present invention. This is enabled by measuring the resistance. This is very different when comparing to inductive sensors or other types of sensors as in such cases alternating current (AC) is run through the system, and therefore all parameters are not known.
* The present invention may open up for measuring on a PT100/PT1000 or a strain gauge (or other resistive material) with the same basic technology and as such measuring temperature, flow and pressure.

## Claims

1. A hybrid device (1) for showers, wash basins or the like, and allowing purification and either recycling of water or discarding of water, wherein said hybrid device (1) comprises a recirculation loop (2) in which a filter system (3) is arranged, wherein the hybrid device (1) also comprises multiple sensors (4), wherein the multiple sensors (4) are electrical conductivity (EC) sensors comprising electrode pairs,
wherein each of the multiple sensors (4) are directed to different parameters, said parameters being water quality, level and/or leakage, wherein the hybrid device (1) also comprises a micro processor and wherein the multiple sensors (4) are connected to the micro processor, wherein the hybrid device (1) also comprises an electronic control system, wherein the electronic control system of the hybrid device (1) is arranged to measure on one electrode pair at a time.

2. The hybrid device (1) according to claim 1, wherein the multiple sensors (4) are directed to measurement of resistance and the conductivity is obtained by conversion of the measured value(s).

3. The hybrid device (1) according to claim 1 or 2, wherein the filter system (3) comprises at least two different filters (5, 6).

4. The hybrid device (1) according to any of claims 1-3, wherein the sensors (4) are directed to all of quality, level and leakage.

5. The hybrid device (1) according to any of the preceding claims, wherein the multiple electrical conductivity (EC) sensors being arranged as at least three electrodes arranged as two electrode pairs with one common electrode and wherein the sensitivity in relation to level differs in at least two of the electrodes.

6. The hybrid device (1) according to any of the preceding claims, wherein at least part of an electronic control system of the hybrid device (1) is galvanically isolated.

7. The hybrid device (1) according to any of the preceding claims, wherein the hybrid device (1) comprises a semi-open water supply line (7) in which at least one electrical conductivity (EC) sensor (4) is provided.

8. The hybrid device (1) according to claim 7, wherein there is provided a flow restrictor in the semi-open water supply line (7).

9. The hybrid device (1) according to claim 7 or 8, wherein there is provided a flushing nozzle arranged for flushing water into the semi-open water supply line.

## Patentansprüche

1. Hybride Vorrichtung (1) für Duschen, Waschbecken oder dergleichen und zum Ermöglichen von Reinigung und entweder Wiederverwenden von Wasser oder Entsorgen von Wasser, wobei die hybride Vorrichtung (1) eine Rezirkulationsschleife (2) umfasst, in der ein Filtersystem (3) angeordnet ist, wobei die hybride Vorrichtung (1) auch mehrere Sensoren (4) umfasst, wobei die mehreren Sensoren (4) Sensoren der elektrischen Leitfähigkeit (EC) sind, die Elektrodenpaare umfassen, wobei sich jeder der mehreren Sensoren (4) auf verschiedene Parameter richtet, wobei die Parameter Wasserqualität, Pegel und/oder Leckverlust sind, wobei die hybride Vorrichtung (1) auch einen Mikroprozessor umfasst und wobei die mehreren Sensoren (4) mit dem Mikroprozessor verbunden sind, wobei die hybride Vorrichtung (1) auch ein elektronisches Steuerungssystem umfasst, wobei das elektronische Steuerungssystem der hybriden Vorrichtung (1) eingerichtet ist, um zu einem Zeitpunkt auf einem Elektrodenpaar zu messen.

2. Hybride Vorrichtung (1) nach Anspruch 1, wobei sich die mehreren Sensoren (4) auf eine Messung des Widerstands richten und die Leitfähigkeit durch Umwandlung des(der) gemessenen Werts(Werte) erhalten wird.

3. Hybride Vorrichtung (1) nach Anspruch 1 oder 2, wobei das Filtersystem (3) mindestens zwei verschiedene Filter (5, 6) umfasst.

4. Hybride Vorrichtung (1) nach einem der Ansprüche 1 bis 3, wobei sich die Sensoren (4) auf alles von Qualität, Pegel und Leckverlust richten.

5. Hybride Vorrichtung (1) nach einem der vorhergehenden Ansprüche, wobei die mehreren Sensoren der elektrischen Leitfähigkeit (EC) als mindestens drei Elektroden angeordnet sind, die als zwei Elektrodenpaare mit einer gemeinsamen Elektrode angeordnet sind, und wobei die Empfindlichkeit in Bezug auf einen Pegel sich bei mindestens zwei der Elektroden unterscheidet.

6. Hybride Vorrichtung (1) nach einem der vorhergehenden Ansprüche, wobei mindestens ein Teil eines elektronischen Steuerungssystems der hybriden Vorrichtung (1) galvanisch isoliert ist.

7. Hybride Vorrichtung (1) nach einem der vorhergehenden Ansprüche, wobei die hybride Vorrichtung (1) eine halboffene Wasserversorgungsleitung (7) umfasst, in der mindestens ein Sensor (4) der elektrischen Leitfähigkeit (EC) bereitgestellt ist.

8. Hybride Vorrichtung (1) nach Anspruch 7, wobei ein Durchflussbegrenzer in der halboffenen Wasserversorgungsleitung (7) bereitgestellt ist.

9. Hybride Vorrichtung (1) nach Anspruch 7 oder 8, wobei eine Spüldüse bereitgestellt ist, die zum Spülen von Wasser in die halboffene Wasserversorgungsleitung angeordnet ist.

## Revendications

1. Dispositif hybride (1) pour douches, lavabos ou similaires, et permettant la purification et soit le recyclage d'eau soit l'évacuation d'eau, ledit dispositif hybride (1) comprenant une boucle de recirculation (2) dans laquelle est agencé un système filtrant (3), le dispositif hybride (1) comprenant également de multiples capteurs (4), les multiples capteurs (4) étant des capteurs de conductivité électrique (EC) comprenant des paires d'électrodes, chacun des multiples capteurs (4) ciblant des paramètres différents, lesdits paramètres étant la qualité, le niveau et/ou les fuites d'eau, le dispositif hybride (1) comprenant également un microprocesseur et les multiples capteurs (4) étant reliés au microprocesseur, le dispositif hybride (1) comprenant également un système de commande électronique, le système de commande électronique du dispositif hybride (1) étant agencé de manière à mesurer sur une paire d'électrodes à la fois.

2. Dispositif hybride (1) selon la revendication 1, dans lequel les multiples capteurs (4) ciblent la mesure d'une résistance et la conductivité est obtenue par conversion de la (des) valeur(s) mesurée(s).

3. Dispositif hybride (1) selon la revendication 1 ou 2, dans lequel le système filtrant (3) comprend au moins deux filtres (5, 6) différents.

4. Système hybride (1) selon l'une quelconque des revendications 1 à 3, dans lequel les capteurs (4) ciblent à la fois la qualité, le niveau et les fuites.

5. Dispositif hybride (1) selon l'une quelconque des revendications précédentes, dans lequel les multiples capteurs de conductivité électrique (EC) sont agencés sous forme d'au moins trois électrodes agencées sous forme de deux paires d'électrodes ayant une électrode commune, et dans lequel la sensibilité par rapport au niveau diffère dans au moins deux des électrodes.

6. Dispositif hybride (1) selon l'une quelconque des revendications précédentes, dans lequel au moins une partie d'un système de commande électronique du dispositif hybride (1) est isolée galvaniquement.

7. Dispositif hybride (1) selon l'une quelconque des revendications précédentes, lequel dispositif hybride (1) comprend une conduite d'alimentation en eau semi-ouverte (7) dans laquelle est placé au moins un capteur (4) de conductivité électrique (EC).

8. Dispositif hybride (1) selon la revendication 7, comportant un limiteur de débit dans la conduite d'alimentation en eau semi-ouverte (7).

9. Dispositif hybride (1) selon la revendication 7 ou 8, comportant une buse de chasse agencée de manière à chasser de l'eau dans la conduite d'alimentation en eau semi-ouverte.
